# EUROPÄISCHE PATENTANMELDUNG

(11) **EP 1 923 247 A1**
(43) Veröffentlichungstag der Anmeldung: **21.05.2008**
(21) Anmeldenummer: 07019257.0
(22) Anmeldetag: 01.10.2007
(51) Int. Cl.: B60J 7/047, B60J 7/043

(54) **Panoramahubdach für ein Kraftfahrzeug, sowie Verfahren zur Herstellung eines Kraftfahrzeuges mit einem Panoramahubdach**

(30) Priorität: 14.11.2006 DE 102006053505
(71) Anmelder: Volkswagen Aktiengesellschaft, 38436 Wolfsburg (DE)
(72) Erfinder: Gebauer, Hans-Gerhard, 38124 Braunschweig (DE); Bleich, Bernhard, 38477 Jembke (DE)

(57) **Zusammenfassung**

Panoramahubdachmodul (12), umfassend mindestens einen Rahmen (7), einen Glasdeckel (1), eine zum Heben bzw. Senken des Glasdeckels gegenüber dem Rahmen geeignete Hübmechanik (6), wobei der Glasdeckel (1) und die Hubmechanik (6) von dem Rahmen (7) aufgenommen sind und der Rahmen (7) zum Einbau in eine Dachaussparung (14) eines Kraftfahrzeuges (13) geeignet ist, sowie Verfahren zur Herstellung eines Panoramahubdachmoduls (12) gemäß einem der Ansprüche 1 bis 7, wobei der Rahmen (7) in einem Werkzeug nach dem long fiber injection Verfahren hergestellt wird, wobei mindestens die Hubmechanik (6) zum Heben und Senken des Glasdeckels (1) bereits im Werkzeug mit dem Rahmen (7) verbunden wird.

## Beschreibung

Panoramadächer sind hinreichend bekannt. Beispielsweise wird in der DE 10039522 A1 ein Fahrzeugdachmodul, bestehend aus einer durchsichtigen Dachhaut, als Außenschale einer Sandwichkonstruktion und aus einer Innenschale der Sandwichkonstruktion vorgeschlagen, bei welchem die Besonderheit darin besteht, dass die Innenschale rahmenartig geformt und unter Bildung einer Panorama-Durchsichtsfläche nur im Randbereich der Außenschale vorgesehen ist, wobei unterhalb der Durchsichtsfläche ein Sonnenrollo angeordnet ist, das mittels in die rahmenartig geformte Innenschale eingeschäumter Elemente an der Innenschale gehalten ist. Das hier vorgeschlagene Fahrzeugdachmodul kann jedoch weder angehoben noch in Richtung der Fahrzeuglängsachse verschoben werden.

Auch sind Dachöffnungssysteme bekannt geworden, die durch einen Hub zu öffnen sind. Ein Schiebehebedach eines Personenkraftwagens mit insbesondere zwei Deckelteilen ist beispielsweise aus der DE 19907377 A1 bekannt geworden. Hier wird ein Schiebehebedach eines Personenkraftwagens mit mehreren, insbesondere zwei, in der geschlossenen Position innerhalb des den zugehörigen Fahrzeug-Dachausschnitt begrenzenden Dachrahmens hintereinander liegenden Deckelteilen beschrieben, wobei das in Fahrtrichtung betrachtet vorderste Deckelteil in Fahrzeuglängsrichtung betrachtet länger ist als das oder die dahinterliegende(n) Deckelteil(e). Erfindungsgemäß sind die Deckelteile in eine ausgestellte Position bringbar, in welcher sie mit ihren Hinterkanten gegenüber dem Dachrahmen angehoben sind, während sich deren Vorderkanten im wesentlichen in der gleichen Position wie bei geschlossenem Dachausschnitt befinden, und alternativ ist das vorderste Deckelteil in Fahrzeuglängsrichtung unter das oder die dahinterliegende(n) geschlossene(n) Deckelteil(e) verschiebbar. Bevorzugt sind die Deckelteile durchsichtig ausgebildet und es sind diesen zugeordnete, im wesentlichen flächengleiche, in der geschlossenen Position unterhalb diesen liegende Schiebehimmelteile vorgesehen, wobei das oder die Schiebehimmelteil(e) des/der kürzeren Deckelteile(s) in der ausgestellten Position zwangsweise geringfügig gegen Fahrtrichtung nach hinten verfahren wird/werden. Ferner wird ausgeführt, dass die Deckelteile auch durchsichtig ausgeführt sein können.

Panoramahubdächer umfassen dementsprechend mindestens ein durchsichtiges Deckelteil und mindestens einen Hubmechanismus um das Deckelteil gegenüber der Karosserie anzuheben bzw abzusenken.

Nachteilig ist jedoch, dass Panoramahubdächer bislang lediglich einzeln an der Fertigungslinie zusammengebaut werden. Hierbei werden alle Bauteile des Panoramahubdaches schrittweise zusammengeführt (Glasdeckel, Rahmen, Gestänge für die Hubmechanik). Die Montage des Panoramahubdaches an der Fertigungslinie nimmt eine erhebliche Fertigungszeit in Anspruch.

Hier setzt die vorliegende Erfindung an und macht es sich zur Aufgabe, ein Panoramahubdach bereitzustellen, welches mit einer reduzierten Fertigungszeit herstellbar ist.

Erfindungsgemäß wird diese Aufgabe durch ein Panoramahubdachmodul mit den Merkmalen des Anspruchs 1 gelöst. Dadurch, dass das Panoramahubdachmodul, mindestens einen Rahmen, einen Glasdeckel und eine zum Heben bzw. Senken des Giasdeckets gegenüber dem Rahmen geeignete Hubmechanik umfasst, wobei der Glasdeckel und die Hubmechanik von dem Rahmen aufgenommen sind und der Rahmen zum Einbau in eine Aussparung eines Daches eines Kraftfahrzeuges geeignet ist, kann eine komplett einbaufertige Einheit verbaut werden. Es ist nicht länger notwendig, die Einzelteile eines Panoramahubdaches einzeln an der Fertigungslinie in das Kraftfahrzeug einzubauen, vielmehr kann eine kompakte Einheit verbaut werden, wodurch sich eine reduzierte Fertigungszeit für ein Kraftfahrzeug ergibt.

In einer vorteilhaften Ausgestaltung der Erfindung kann vorgesehen sein, dass der Rahmen aus einer Anordnung von zwei Seitenstreben und zwei Querstreben gebildet wird, die einen rechteckförmigen Rahmen ausbilden. Ein derartig ausgestalteter Rahmen eignet sich in vorteilhafter Weise zum Einsetzen in eine korrespondierende Aussparung eines Fahrzeugdaches, wobei der Rahmen eine geeignete Anschlussfläche bereitstellen kann, so dass der Rahmen beispielsweise auf einen Randbereich der Aussparung aufgelegt und verklebt werden kann.

In einer weiteren vorteilhaften Ausgestaltung des vorgeschlagenen Panoramahubdachmoduls kann vorgesehen sein, dass der Rahmen mit einer umlaufenden Dichtung ausgestattet ist. Entsprechend kann der Glasdeckel in einem geschlossenen Zustand des Panoramahubdachmoduls auf der Dichtung aufliegen, so dass beispielsweise kein Fahrtwind oder Regenwasser in den Fahrzeuginnenraum gelangen kann.

Es kann weiterhin vorteilhafterweise vorgesehen sein, dass der Rahmen mit einem Rollo ausgestattet ist, welches in Führungsschienen entlang der Seitenstreben geführt wird. Auch die Integration einer derartigen Einrichtung in ein Panoramahubdachmodul ist vorteilhaft, da dementsprechend keine separate Montage, beispielsweise im Dachhimmel eines Kraftfahrzeuges stattfinden muss. Als Folge dessen kann Fertigungszeit eingespart werden.

In einer weiteren vorteilhaften Ausgestaltung der vorliegenden Erfindung kann vorgesehen sein, dass die Hubmechanik zum Heben bzw. Senken des Glasdeckels Führungsschienen umfasst, die in den Seitenstreben des Rahmens aufgenommen sind. Eine Integration der Führungsschienen in den Rahmen ermöglicht ebenfalls eine Ersparnis an Fertigungszeit, da die Integration der Führungsschienen in den Rahmen beispielsweise auch außerhalb des Kraftfahrzeuges stattfinden kann und dementsprechend Fertigungsvorteile ausgenutzt werden können.

In einer weiteren vorteilhaften Ausgestaltung der vorliegenden Erfindung kann vorgesehen sein, dass es sich bei dem Material des Rahmens um ein glasfaserverstärktes PUR-System handelt. Ein glasfaserverstärkter Werkstoff bietet die notwendige Tragfähigkeit und Stabilität für einen derartigen Rahmen. Darüber hinaus ist ein glasfaserverstärkter Werkstoff, gemessen an der Tragfähigkeit und Belastbarkeit, relativ leicht im Vergleich zu anderen Werkstoffen, so dass durch die Ausgestaltung des Rahmens mit diesem Werkstoff eine erhebliche Gewichtsersparnis erzielt werden kann.

Es kann ferner vorteilhafterweise vorgesehen sein, dass die in einer Einbausituation des Panoramahubdachmoduls in Richtung der Frontscheibe des Fahrzeugs zugewandte Querstrebe eine hochglänzende Oberfläche aufweist.

Eine weitere Aufgabe der vorliegenden Erfindung liegt darin, ein vorteilhaftes Verfahren zur Herstellung eines erfindungsgemäßen Verfahrens zur Herstellung eines Panoramahubdachmoduls vorzuschlagen.

Erfindungsgemäß wird diese Aufgabe dadurch gelöst, dass der Rahmen in einem Werkzeug nach dem long fiber injection Verfahren (LFI-Verfahren) hergestellt wird, wobei mindestens die Hubmechanik zum Heben und Senken des Glasdeckels bereits vor der Montage im Kraftfahrzeug im Rahmen vormontiert ist. Entsprechend kann durch das hier vorgeschlagene Herstellungsverfahren Fertigungszeit eingespart werden, wobei sich ebenfalls ein geringes Gewicht ergibt. Es bedarf ferner nur eines Werkzeuges für die Herstellung eines derartigen Panoramahubdachmoduls. Auch kann die Härte des Rahmens im Wesentlichen durch den Faseranteil eingestellt werden. Darüber hinaus ergibt sich eine höhere Variabilität bei Veränderungen.

In einer weiteren vorteilhaften Ausgestaltung des vorgeschlagenen Verfahrens kann vorgesehen sein, dass weitere Bauteile, insbesondere die Dichtung, das Rollo, die Führungsschiene für das Rollo, die Führungsschiene für die Hubmechanik und der Glasdeckel bereits vor der Montage im Kraftfahrzeug im Rahmen vormontiert werden. Entsprechend dieser Vorgehensweise kann weiterhin Fertigungszeit eingespart werden, da die hier genannten Komponenten nicht separat am Fertigungsband in das Kraftfahrzeug eingebaut werden müssen.

Eine weitere Aufgabe der vorliegenden Erfindung liegt darin, ein Kraftfahrzeug vorzuschlagen, welches mit einem vorteilhaften Panoramahubdach ausgestattet ist.

Erfindungsgemäß wird diese Aufgabe durch ein Kraftfahrzeug mit einem Fahrzeugdach gemäß. Anspruch 9 gelöst, wobei das Fahrzeugdach mit einer Aussparung ausgestattet ist, in der ein vorgefertigtes Panoramahubdachmodul gemäß mindestens einem der Ansprüche 1 bis 7 aufgenommen ist.

Eine weitere Aufgabe der vorliegenden Erfindung liegt darin, ein vorteilhaftes Verfahren zur Herstellung eines Kraftfahrzeugs gemäß Anspruch 9 vorzuschlagen, welches eine rationelle, und zeitsparende Fertigung ermöglicht.

Erfindungsgemäß wird diese Aufgabe dadurch gelöst, dass eine Kleberaupe auf dem Randbereich der Aussparung eines Kraftfahrzeugs gemäß Anspruch 9 aufgebracht wird, wobei ein vorgefertigtes Panoramahubdachmodul gemäß mindestens einem der Ansprüche 1 bis 7 in die Aussparung eingesetzt wird. Durch die Kleberaupe ergibt sich eine adhäsive und im Übrigen wasserdichte Verbindung zwischen dem Fahrzeugdach und dem Panoramahubdachmodul. Das Panoramahubdachmodul kann ähnlich wie eine Frontscheibe eingesetzt werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Explosionsdarstellung eines erfindungsgemäßen Panoramahubdachmoduls;
- Fig. 2: ein erfindungsgemäßes Panoramahubdachmodul in einer Einbausituation oberhalb einer Aussparung in einem Kraftfahrzeugdach;
- Fig. 3: ein erfindungsgemäßes Kraftfahrzeug mit einem eingebauten erfindungsgemäßen Panoramahubdachmodul.

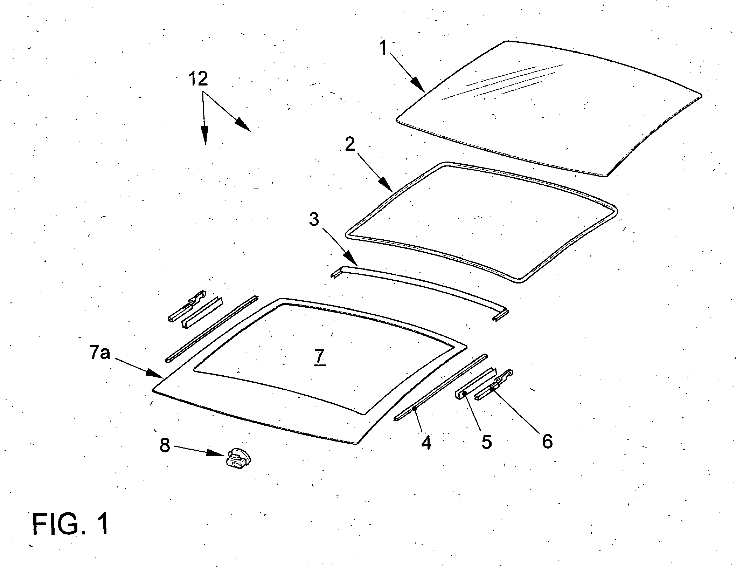

Zunächst wird auf Fig. 1 Bezug genommen.

Ein Panoramahubdachmodul 12 umfasst im Wesentlichen einen rechteckförmigen Rahmen 7, einen Glasdeckel 1, eine Dichtung 2, ein Rollo 3, eine Führungsschiene 4 für das Rollo 3, eine Hubmechanik 6, eine Führungsschiene 5 für die Hubmechanik 6, und einen Elektromotor 8 zum Antrieb der Hubmechanik 6.

Der Rahmen 7 besteht aus einem faserverstärkten Kunststoff, vorzugsweise aus einem glasfaserverstärkten PUR-System. Entsprechend wird der Rahmen in einem so genannten LFI-Verfahren (long fibre injection) hergestellt, welches sich durch folgende Vorteile auszeichnet. Der Rahmen 7 weist ein geringes Gewicht auf. Ferner wird nur ein Werkzeug benötigt, um alle Bauteile zusammenzuführen, d.h. die Verarbeitung in einem Werkzeug wird möglich. Es ergibt sich eine höhere Variabilität bei Veränderungen. Auch kann über den Faseranteil die Härte des Rahmens 7 eingestellt werden.

Der Rahmen 7 weist zwei Querstreben und zwei Seitenstreben auf, so dass der Rahmen 7 insgesamt eine rechteckförmige Gestalt aufweist. Die in einer eingebauten Position, der Frontscheibe zugewandte Querstrebe des Rahmens 7 weist eine größere Breite als die übrigen Rahmenseitenteile auf. Ferner ist die Querstrebe mit einer so genannten Class-A Oberfläche 7a ausgestattet. Vorzugsweise wird diese Oberfläche aus einer hochglänzenden Folie gebildet.

Das Panoramahubdachmodul 12 wird vom Zulieferer komplett montiert. Das so vollständig montierte Panoramahubdachmodul 12 wird mittels Verklebung in eine Karosserieaussparung 14 eines Kraftfahrzeuges 13 eingesetzt und verklebt. Diese Montage ist vergleichbar mit dem Einsetzen einer Frontscheibe eines Fahrzeuges. Sofern eine Reparatur, beispielsweise an der Hubmechanik 6 vorgenommen werden soll, kann der Glasdeckel 1 entfernt werden. Dementsprechend sind alle, ursprünglich unterhalb des Glasdeckels 1 angeordneten Teile, beispielsweise die Hubmechanik 6, nunmehr von oben zugänglich.

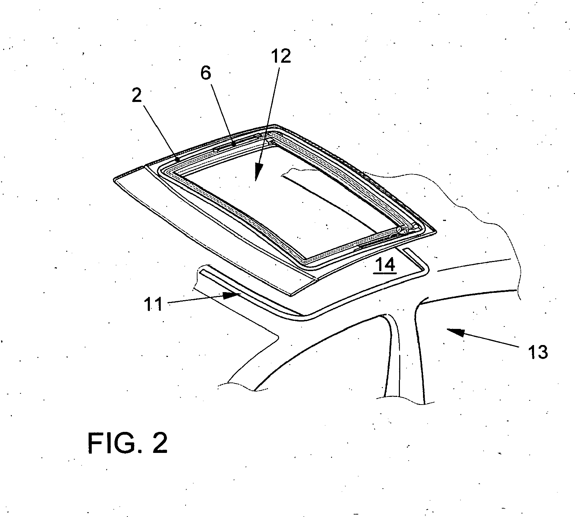

In Fig. 2 ist eine Einbausituation, insbesondere ein Panoramahubdachmodul 12 und eine Fahrzeugkarosserie eines Kraftfahrzeuges 13 mit einer zum Einbau des Panoramahubdachmoduls 12 geeigneten Dachaussparung 14, erkennbar. Ferner ist auch eine Kleberaupe 11 erkennbar, die im Randbereich der Dachaussparung 14 aufgetragen ist. Die Dachaussparung 14 ist derart dimensioniert, dass der Rahmen 7auf dem Randbereich der Dachaussparung 14 aufliegen kann.

Da im Rahmen 7 bereits die Dichtungen integriert sind, kann ein Wasserablaufmanagement entfallen. Wasser wird über das Panoramahubdachmodul 12 nach vorne über die Class-A Oberfläche 7a und über die Frontscheibe abgeführt.

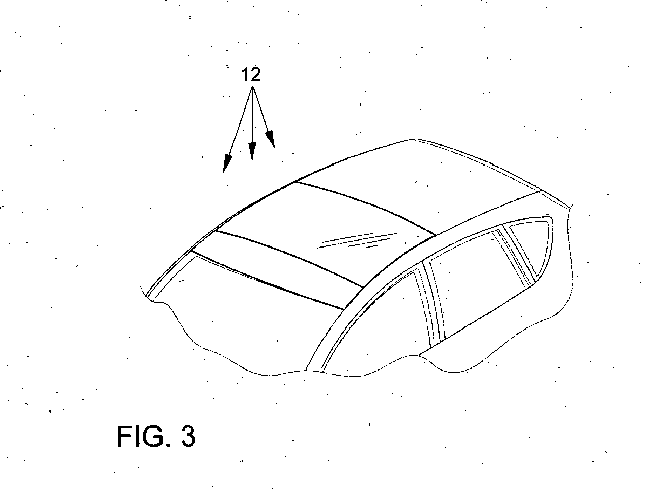

In Fig. 3 ist das Panoramahubdachmodul 12 in einem eingebauten Zustand in einem Kraftfahrzeug 13 erkennbar.

### Bezugszeichenliste

- 1: Glasdeckel
- 2: Dichtung
- 3: Rollo
- 4: Führungsschiene für Rollo
- 5: Führungsschiene für Hubmechanik
- 6: Hubmechanik
- 7: Rahmen
- 7a: Class-A Oberfläche
- 8: Elektromotor
- 11: Kleberaupe
- 12: Panoramahubdachmodul
- 13: Fahrzeug
- 14: Dachaussparung

## Patentansprüche

1. Panoramahubdachmodul (12) für ein Kraftfahrzeug, umfassend mindestens
- einen Rahmen (7),
- einen Glasdeckel (1),
- eine zum Heben bzw. Senken des Glasdeckels gegenüber dem Rahmen geeignete Hubmechanik (6), wobei
- der Glasdeckel (1) und die Hubmechanik (6) von dem Rahmen (7) aufgenommen sind und der Rahmen (7) zum Einbau in eine Dachaussparung (14) eines Kraftfahrzeuges (13) geeignet ist.

2. Panoramahubdachmodul nach Anspruch 1, **dadurch gekennzeichnet, dass** der Rahmen (7) aus einer Anordnung von zwei Seitenstreben und zwei Querstreben gebildet wird, die einen rechteckförmigen Rahmen ausbilden.

3. Panoramahubdachmodul nach einem der vorhergehenden Ansprüche, **dadurch gekennzeichnet, dass** der Rahmen (7) mit einer umlaufenden Dichtung (2) ausgestattet ist.

4. Panoramahubdachmodul nach einem der vorhergehenden Ansprüche, **dadurch gekennzeichnet, dass** der Rahmen (7) mit einem Rollo (3) ausgestattet ist, welches in Führungsschienen (4) entlang der Seitenstreben geführt wird.

5. Panoramahubdachmodul nach einem der vorhergehenden Ansprüche, **dadurch gekennzeichnet, dass** die Hubmechanik (6) zum Heben bzw. Senken des Glasdeckels (1) Führungsschienen (5) umfasst, die in den Seitenstreben des Rahmens (7) aufgenommen sind.

6. Panoramahubdachmodul nach einem der vorhergehenden Ansprüche, **dadurch gekennzeichnet, dass** es sich bei dem Material des Rahmens (7) um ein glasfaserverstärktes PUR-System handelt.

7. Panoramahubdachmodul nach einem der vorhergehenden Ansprüche, **dadurch gekennzeichnet, dass** die in einer Einbausituation des Panoramahubdachmoduls (12) in Richtung der Frontscheibe des Kraftfahrzeugs (13) zugewandte Querstrebe eine Class-A Oberfläche; insbesondere eine hochglänzende Oberfläche aufweist, insbesondere mit einer Hochglanz-Folie beklebt ist.

8. Verfahren zur Herstellung eines Panoramahubdachmoduls (12) für ein Kraftfahrzeug gemäß einem der Ansprüche 1 bis 7, **dadurch gekennzeichnet, dass** der Rahmen (7) in einem Werkzeug nach dem long fiber injection Verfahren hergestellt wird, wobei mindestens die Hubmechanik (6) zum Heben und Senken des Glasdeckels (1) bereits vor der Montage im Kraftfahrzeug im Rahmen (7) vormontiert ist.

9. Verfahren zur Herstellung eines Panoramahubdachmoduls gemäß Anspruch 8, **dadurch gekennzeichnet, dass** der Rahmen (7) in dem Werkzeug nach dem long fiber injection Verfahren hergestellt wird.

10. Verfahren zur Herstellung eines Panoramahubdachmoduls gemäß Anspruch 8 oder 9, **dadurch gekennzeichnet, dass** weitere Bauteile, insbesondere die Dichtung (2), das Rollo (3), die Führungsschiene (4) für das Rollo, die Führungsschiene (5) für die Hubmechanik (6) und der Glasdeckel (1) bereits vor der Montage im Kraftfahrzeug im Rahmen (7) vormontiert werden.

11. Kraftfahrzeug (13) mit einem Fahrzeugdach mit einer Dachaussparung (14), wobei in der Dachaussparung (14) ein vorgefertigtes Panoramahubdachmodul (12) gemäß mindestens einem der Ansprüche 1 bis 7 aufgenommen ist.

12. Verfahren zur Herstellung eines Kraftfahrzeugs (13) gemäß Anspruch 11, **dadurch gekennzeichnet, dass** eine Kleberaupe (11) auf dem Randbereich der Dachaussparung (14) aufgebracht wird, wobei ein vorgefertigtes Panoramahubdachmodul (12) gemäß mindestens einem der Ansprüche 1 bis 7 in die Dachaussparung (14) eingesetzt wird.
